# EUROPÄISCHE PATENTSCHRIFT

(11) **EP 2 062 782 B1**
(45) Veröffentlichungstag und Bekanntmachung des Hinweises auf die Patenterteilung: **30.05.2012**
(21) Anmeldenummer: 08019727.0
(22) Anmeldetag: 12.11.2008
(51) Int. Cl.: B60R 5/04, B60R 7/02

(54) **Staufach mit Tragrahmen und Aufnahmevorrichtung für einen Tragrahmen**
Storage compartment with bearer frame and acceptance device for a bearer frame
Compartiment de rangement doté d'un cadre porteur et dispositif de réception pour un cadre porteur

(30) Priorität: 26.11.2007 DE 102007058255
(43) Veröffentlichungstag der Anmeldung: 27.05.2009
(73) Patentinhaber: BOS GmbH & Co. KG, 73760 Ostfildern (DE)
(72) Erfinder: Bühl, Olaf, 73095 Albershausen (DE); Gallandt, Christoph, 72622 Nürtingen (DE); Rau, Uwe, 74354 Besigheim (DE); Schlecht, Werner, P., 71665 Vaihingen/Enz (DE)
(74) Vertreter: Wilhelm, Peter

(56) Entgegenhaltungen:
- EP-A- 1 717 104
- DE-A1- 10 332 983
- DE-A1-102005 051 732
- DE-A1-102006 013 974
- FR-A- 2 876 641

## Beschreibung

Die Erfindung betrifft ein Staufach mit einer Wandung und einem die Wandung tragenden Tragrahmen, wobei eine Höhe der Wandung mindestens abschnittsweise mittels mindestens einer ersten Wickelwelle veränderbar ist.

Aus der DE 10 2006 013 974 A1 sind zeitweise nutzbare Staufächer bekannt, wobei die Staufächer eine verformbare Seitenwand aufweisen, so dass die Höhe der Staufächer variabel ist. Die Höhe und damit auch die Größe des Staufachs kann durch die verformbare Seitenwand in Abhängigkeit einer gewünschten Nutzung eingestellt werden. Dadurch ist es möglich, bei Nichtbenutzung eine minimale Höhe des Staufachs zu realisieren, so dass ein beispielsweise unterhalb einer Heckablage in einem Laderaum angeordnetes Staufach nur unwesentlich in den Laderaum hineinragt. Für eine Nutzung kann das Staufach dagegen auf eine gewünschte Größe vergrößert werden. Eine Wandung kann dabei zumindest abschnittsweise durch eine Rollobahn gebildet sein, welche auf einer Wickelwelle auf- und abwickelbar angebracht ist. Die Wickelwellen sind in einem Tragrahmen gelagert.

Es ist Aufgabe der vorliegenden Erfindung, ein zeitweise nutzbares Staufach zu schaffen, welches ein möglichst geringes Gewicht aufweist. Es ist eine weitere Aufgabe der Erfindung, eine Aufnahmevorrichtung zur Lagerung einer Wickelwelle eines Staufachs zu schaffen.

Diese Aufgabe wird gelöst durch ein Staufach mit einer Wandung und einem die Wandung tragenden Tragrahmen, wobei eine Höhe der Wandung mindestens abschnittsweise mittels mindestens einer ersten Wickelwelle veränderbar ist, der Tragrahmen mindestens eine Aufnahmevorrichtung mit wenigstens einem ersten Stutzen aufweist und die erste Wickelwelle auf dem ersten Stutzen gelagert ist, so dass die erste Wickelwelle einen Teil des Tragrahmens bildet.

Zur Variation der Höhe kann die Wandung elastisch und/oder unelastisch verformbar sein. Eine Veränderung der Höhe erfolgt dabei mittels der mindestens einen Wickelwelle. Die Wandung ist in einer Ausgestaltung nach Art einer Jalousie oder ziehharmonikaartig faltbar, wobei Bänder vorgesehen sind, welche auf der Wickelwelle aufwickelbar sind, so dass die Wandung gefaltet oder zusammengeschoben wird. In anderen Ausgestaltung ist mindestens ein Teil der Wandung als flexibles Flächengebilde gestaltet, wobei das Flächengebilde als Rollobahn auf der Wickelwelle auf- und abwickelbar angebracht ist.

Durch die Aufnahmevorrichtung mit dem Stutzen ist die Wickelwelle drehbar gelagert, wobei die Wickelwelle und die Aufnahmevorrichtung einen Teil des Tragrahmens bilden. Dadurch kann auf zusätzliche Elemente zum Lagern der Wickelwelle verzichtet werden. Folglich ist eine besonders leichte Bauweise des Staufachs möglich. Die Wickelwelle ist in einer vorteilhaften Ausgestaltung zumindest an den Enden als Rohr oder Buchse gestaltet, so dass sie auf den Stutzen aufsetzbar ist.

In einer Ausgestaltung spannt der Tragrahmen eine im Wesentlichen rechteckförmige Fläche auf, wobei die Aufnahmevorrichtung einen Eckbereich des Tragrahmens bildet. Eine rechteckförmige Gestaltung des Tragrahmens und damit auch des Staufachs ist beispielsweise bei einer verschieblichen Anbringung des Staufachs in einem Kraftfahrzeug von Vorteil.

In einer Weiterbildung weist die Aufnahmevorrichtung wenigstens zwei, im Wesentlichen rechtwinklig zueinander angeordnete, vorzugsweise wenigstens drei, T-fömig angeordnete im Wesentlichen baugleiche Stutzen auf. Durch zwei rechtwinklig zueinander angeordnete Stutzen können zwei entsprechend angeordnete Wickelwellen über eine gemeinsame Aufnahmevorrichtung gelagert werden. Bei einer Ausgestaltung mit drei Stutzen kann ein verbleibender Stutzen zur Anbindung weiterer Funktionselemente genutzt werden. Durch die baugleiche Gestaltung der Stutzen ist es möglich, ein Element in verschiedenen Positionen anzuordnen.

In einer vorteilhaften Ausgestaltung weisen die Stutzen eine nicht-rotationssymmetrische Außenkontur zur drehfesten Aufnahme einer Lagerhülse auf. Die Aufnahmevorrichtung kann dabei aus einem Material gefertigt werden, durch welche eine günstige Herstellung möglich ist. Das Material sollte dabei eine ausreichende Steifigkeit aufweisen, um auftretende Kräfte aufzunehmen. In anderen Ausgestaltungen ist hierfür zumindest abschnittsweise eine Versteifung der Aufnahmevorrichtung vorgesehen. Um gute Gleitlagereigenschaften für die Drehlager der Wickelwelle zu realisieren, sind vorzugsweise auf den Stutzen Lagerhülsen aufgebracht. Diese können dabei aus einem geeigneten Material mit geringen Fertigungstoleranzen hergestellt werden.

In einer Ausgestaltung der Erfindung ist eine Sperrvorrichtung zumindest teilweise auf einem Stutzen angeordnet, durch welche mindestens eine Drehbewegung der ersten Wickelwelle sperrbar ist. Durch Lagerung der Sperrvorrichtung oder Teile davon an der Aufnahmevorrichtung kann auf weitere Lagerelemente verzichtet werden. Dadurch ist es auch möglich, entsprechende Elemente in einem beliebigen Eckbereich des Tragrahmens anzuordnen.

In einer Weiterbildung umfasst die Sperrvorrichtung eine Sperrklinke, wobei eine Drehbewegung der Wickelwelle zum Verringern der Höhe der Wandung durch die Sperrklinke sperrbar ist. Eine entsprechende Sperrvorrichtung ist auf einfache Weise realisierbar. Zum "Einfahren" der Wandung bzw. des Staufachs ist beispielsweise ein bekannter Federmotor an der Wickelwelle vorgesehen, wobei ein Abwickeln bzw. ein Längen der Wandung entgegen der Kraft des Federmotors erfolgt. Um ein Einfahren zu verhindern, greift die Sperrklinke in ein entsprechendes Gegenelement, beispielsweise ein Zahnrad mit asymmetrischen Zahnflanken.

In einer anderen Ausgestaltung weist die Sperrvorrichtung Mittel auf, durch welche eine Drehbewegung der Wickelwelle für eine Längung der Wandung sperrbar ist. Es hat sich herausgestellt, dass beispielsweise aufgrund von Erschütterungen oder dergleichen beim Transport im Kraftfahrzeug Kräfte auf das Staufach einwirken können, welche zu einer ungewünschten Längung der Wandung führen. Durch eine geeignete Sperrvorrichtung können derartige Längungen vermieden werden.

Vorzugsweise weist die Aufnahmevorrichtung wenigstens einen Lagerstutzen zur Anbindung einer Führungsvorrichtung, insbesondere einer Laufschiene auf. Der Lagerstutzen kann dabei im Wesentlichen baugleich zu den weiteren Stutzen der Aufnahmevorrichtung gestaltet sein. In anderen Ausgestaltungen sind jedoch aufgrund anderer Anforderungen an den Lagerstutzen abweichende Bauformen vorgesehen. Insbesondere zur Aufnahme der Wickelwellen weisen die Stutzen vorzugsweise eine Mindestlänge auf, so dass sie in die Wickelwellen ausreichend hineinragen. Der Lagerstutzen kann dagegen vergleichsweise kurz gestaltet sein. In einem Ausführungsbeispiel sind die drei T-förmig angebrachten Stutzen und der Lagerstutzen in einer Ebene angeordnet. Ein Schnittbereich der Stutzen und des Lagerstutzens kann dabei als Anbindungsbereich für eine Abdeckung oder Blende und/oder zur Anbringung weiterer Funktionselemente dienen.

In einer weiteren Ausgestaltung ist an wenigstens einem Ende der Wickelwelle ein Kegelrad drehfest angeordnet, wobei das Kegelrad mit einem Sperr-Kegelrad der Sperrvorrichtung zusammenwirkt. Das Kegelrad und das Sperr-Kegelrad sind dabei in einem durch die Aufnahmevorrichtung vorgegebenen Winkel gelagert, so dass eine sichere Ausrichtung möglich ist.

Die Wandung umfasst in einer Ausgestaltung wenigstens zwei Rollobahnen, welche auf zwei im Wesentlichen rechtwinklig zueinander angeordneten Wickelwellen auf- und abwickelbar angebracht sind. Dadurch ist eine besonders formschöne Gestaltung des Staufachs möglich. Durch die erfindungsgemäße Aufnahmevorrichtung können die beiden Wickelwellen Teile des Tragrahmens bilden. Zusätzlich kann in dem so geschaffenen Eckbereich eine Sperrvorrichtung exakt positioniert werden.

Die Rollobahnen weisen an ihren Rändern vorzugsweise zueinander komplementäre Reißverschlusselemente auf, welche durch einen im Wesentlichen ortsfest gelagerten Reißverschlussschieber verbindbar sind. Dadurch kann ein geschlossenes Staufach geschaffen werden, durch welches auch kleine Gegenstände, wie Mobiltelefone, mp3-Spieler, CD-Spieler, Bücher, Akten etc. sicher aufgenommen werden können.

In einer vorteilhaften Weiterbildung der Aufnahmevorrichtung ist der Reißverschlussschieber in der Aufnahmevorrichtung gelagert. Der Reißverschlussschieber kann dadurch ebenfalls in einer exakten Position relativ zu den zu verbindenden Rollobahnen angebracht werden. Ein Lager für den Reißverschlussschieber ist beispielsweise in einem Schnittbereich der Stutzen ausgebildet.

Die Aufgabe wird weiter gelöst durch eine Aufnahmevorrichtung für mindestens eine Wickelwelle eines Staufachs mit einer Wandung, wobei die Höhe der Wandung mindestens abschnittsweise durch die Wickelwelle veränderbar ist, die Aufnahmevorrichtung einen ersten Stutzen, auf welchem die Wickelwelle drehbar lagerbar ist, und mindestens einen zweiten Stutzen aufweist, und auf dem zweiten Stutzen eine zweite Wickelwelle, eine Sperrvorrichtung und/oder eine Führungsvorrichtung lagerbar ist. Durch eine entsprechende Aufnahmevorrichtung ist es möglich, einen Tragrahmen zumindest abschnittsweise durch die Wickelwelle zu bilden.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den schematischen Zeichnungen zeigen:
- Fig. 1:: eine Darstellung eines Fahrzeughecks mit einem erfindungsgemäßen Staufach;
- Fig. 2:: eine Draufsicht auf ein Staufach gemäß Fig. 1;
- Fig. 3:: eine erfindungsgemäße Aufnahmevorrichtung;
- Fig. 4:: ein Detail IV gemäß Fig. 2;
- Fig. 5:: das Detail gemäß Fig. 4 im teilweise auseinander gebauten Zustand und
- Fig. 6:: ein Detail VI gemäß Fig. 2.

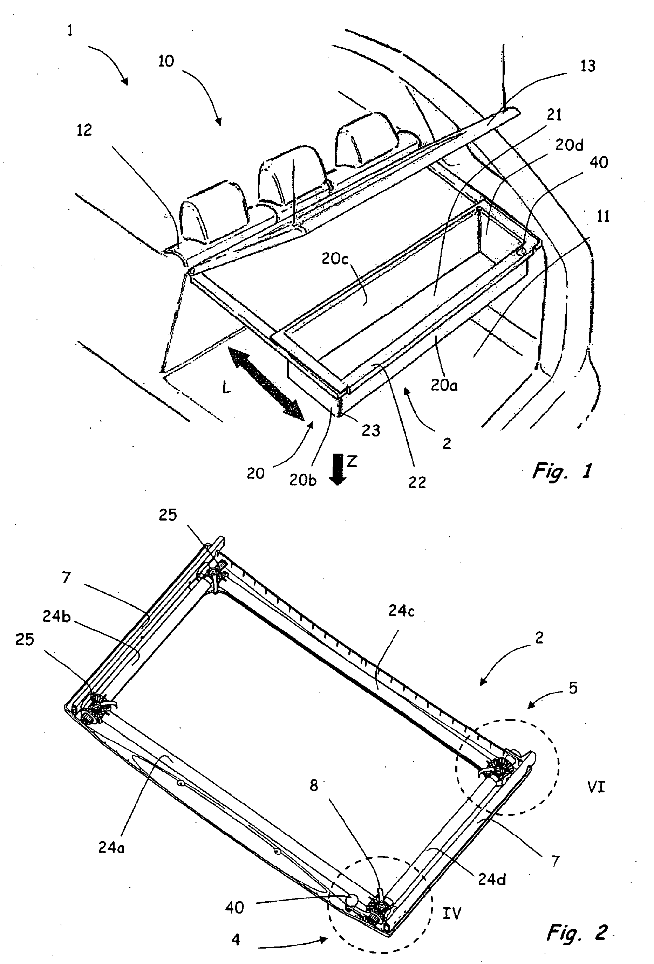

Fig. 1 zeigt schematisch ein Fahrzeugheck 1 eines nicht weiter dargestellten Kraftfahrzeugs. Bei dem dargestellten Kraftfahrzeug handelt es sich um ein Kombifahrzeug, wobei ein Fahrgastraum 10 und ein Laderaum 11 über eine Rückbank 12 voneinander getrennt sind. Der Laderaum 11 ist durch eine Heckklappe 13 abdeckbar, welche auf Höhe der Rückbank 12 verschwenkbar angebracht ist. Unterhalb der Heckklappe 13 ist ein erfindungsgemäßes Staufach 2 angeordnet. Das dargestellte Staufach 2 ist in eine Längsrichtung L über in Fig. 1 nicht dargestellte Führungsschienen oder dergleichen verschieblich gelagert. Das Staufach 2 weist eine Wandung 20 und einen Boden 21 auf, wobei eine Höhe der Wandung 20 in eine Richtung Z vergrößerbar ist. Die dargestellte Wandung 20 umfasst in dem dargestellten Ausführungsbeispiel vier flexible Flächengebilde oder Rollobahnen 20a bis 20d, welche jeweils auf einer in Fig. 1 durch eine Abdeckung 22 verdeckten Wickelwelle auf- und abwickelbar angebracht sind. Die flexiblen Flächengebilde oder Rollobahnen 20a bis 20d sind beispielsweise ein Gewirke, Gewebe, Vlies, eine Folienbahn oder ähnliches oder Kombinationen davon. Die vier Wickelwellen sind so angeordnet, dass sie eine rechteckförmige Bodenfläche 21 umgeben. Um beim Abwickeln der Rollobahnen 20a bis 20d einen geschlossenen Stauraum zu schaffen, können aneinander angrenzende Rollobahnen 20a bis 20d jeweils durch einen Reißverschluss 23 miteinander beim Abwickeln der Rollobahnen 20a bis 20d in Z-Richtung verbunden werden.

Ein Abwickeln der Rollobahnen 20a bis 20d von den in Fig. 1 verdeckten Wickelwellen und damit ein Vergrößern der Höhe des Staufachs 2 in Z-Richtung erfolgt beispielsweise durch Aufbringen einer Kraft an dem Staufachboden 21. Eine entsprechende Kraft kann beispielsweise durch Einlegen eines in Fig. 1 nicht dargestellten Gegenstands und/oder durch Aufbringen einer Druckkraft durch einen Nutzer erfolgen. Eine Längung der Wandung 20 erfolgt dabei vorzugsweise entgegen der Kraft eines Zwangselements, beispielsweise einer Feder (hier nicht dargestellt). Dabei können an jeder Wickelwelle Federelemente in Form von Federmotoren oder dergleichen vorgesehen sein. Durch eine in Fig. 1 nicht weiter dargestellte Sperreinrichtung wird in dem dargestellten Ausführungsbeispiel ein Einfahren des Staufachs 2, d.h. ein Verringern der Höhe entgegen der Z-Richtung, gesperrt. Durch einen Lösekopf 40 kann die Sperreinrichtung gelöst und damit das Staufach 2 eingefahren werden.

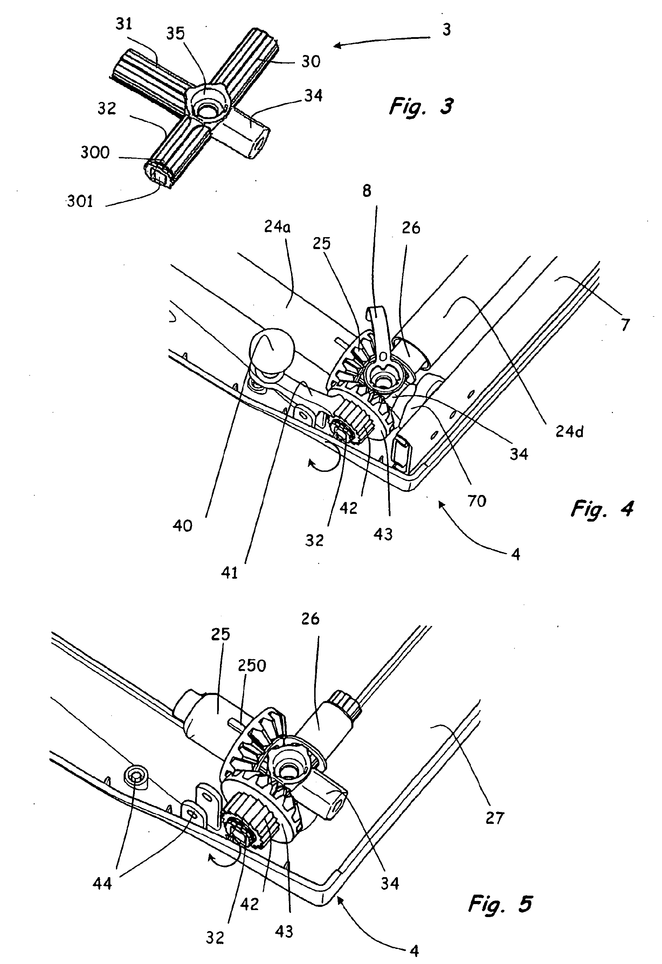

Fig. 2 zeigt schematisch eine Draufsicht auf das Staufach 2 gemäß Fig. 1 ohne eine Abdeckung 22. Dadurch sind in Fig. 2 die Wickelwellen 24a bis 24d des Staufachs 2 sichtbar. Die Wickelwellen 24a bis 24d sind dabei jeweils rechtwinklig miteinander mittels in Fig. 3 im Detail dargestellten Aufnahmevorrichtungen 3 miteinander verbunden, so dass die Aufnahmevorrichtungen 3 und die Wickelwellen 24a bis 24d einen Tragrahmen für das Staufach 2 bilden. Die Wickelwellen 24a bis 24d weisen vorzugsweise an beiden Enden Kegelräder 25 auf, wobei in den Figuren zur besseren Übersicht die Kegelräder 25 nur teilweise dargestellt sind. In einem ersten Eckbereich des Staufachs 2 ist eine Sperreinrichtung 4 zum Verhindern einer Aufwickelbewegung vorgesehen. In einem weiteren Eckbereich des Staufachs 2 ist eine Sperreinrichtung 5 vorgesehen, durch welche eine Längung der in Fig. 1 sichtbaren Wandung 20 verhinderbar ist. In den vier Eckbereichen ist weiter jeweils eine Halterung 8 für je einen nicht dargestellten Reißverschlussschieber der in Fig. 1 dargestellten Reißverschlüsse 23 vorgesehen. Für eine verschiebliche Lagerung sind an dem Staufach 2 Führungsschienen 7 angebracht.

Fig. 3 zeigt schematisch eine Aufnahmevorrichtung 3. Wie in Fig. 3 erkennbar, umfasst die Aufnahmevorrichtung 3 in dem dargestellten Ausführungsbeispiel drei im Wesentlichen baugleiche Stutzen 30 bis 32, welche im Wesentlichen T-förmig zueinander angeordnet sind. Mit anderen Worten, liegen die Stutzen 30 bis 32 in einer Ebene und ein mittlerer Stutzen 31 schließt jeweils einen rechten Winkel mit den beiden anderen Stutzen 30, 32 ein. Die Stutzen 30 bis 32 besitzen jeweils eine nichtrotationssymmetrische Außenkontur, so dass verschiedene Bauteile, wie weiter unten im Detail beschrieben, auf den Stutzen 30 bis 32 drehfest anbringbar sind. In dem dargestellten Ausführungsbeispiel weisen die Stutzen 30 bis 32 zu diesem Zweck an ihrer Oberfläche jeweils Federvorsprünge 300 auf, welche in entsprechende Nuten der aufzunehmenden Bauteile einführbar sind. In den Stutzen 30 bis 32 ist in dem dargestellten Ausführungsbeispiel weiter ein Hohlraum 301 ausgebildet, durch welchen weitere Elemente mit den Stutzen 30 bis 32 verbindbar sind. Die Aufnahmevorrichtung weist weiter einen Lagerstutzen 34 zur Anbindung einer Führungsvorrichtung, beispielsweise einer in Fig. 2 sichtbaren Führungsschiene 7 auf. In einem Schnittbereich der Stutzen 30 bis 34 ist ein Lager 35 für ein ebenfalls in Fig. 2 dargestellten Halter 8 für einen Reißverschlussschieber vorgesehen.

Fig. 4 zeigt schematisch ein Detail IV gemäß Fig. 2, wobei die Sperrvorrichtung 4 im Detail dargestellt ist. Die Sperrvorrichtung 4 umfasst eine Sperrklinke 41, welche in ein Zahnrad 42 mit asymmetrischen Zahnflanken greift. In dem dargestellten Ausführungsbeispiel sperrt die Sperrklinke 41 eine Drehung des Zahnrads 42 entgegen dem Uhrzeigersinn. Eine Drehung im Uhrzeigersinn ist dagegen, wie schematisch durch einen Pfeil dargestellt, durch die Sperrklinke 41 nicht oder nur unwesentlich behindert. Zum Lösen der Sperrklinke 41 ist ein Löseknopf 40 vorgesehen. Das Zahnrad 42 ist drehfest mit einem Sperr-Kegelrad 43 verbunden. Das Sperr-Kegelrad 43 kämmt mit einem Kegelrad 25 der Wickelwelle 24a. Dadurch ist durch eine Sperrung der Drehbewegung des Zahnrads 42 auch eine Drehbewegung der Wickelwelle 24a durch die Sperrklinke 41 in eine Richtung sperrbar. Dabei ist die Anordnung derart gewählt, dass durch die Sperrklinke 41 eine Drehbewegung der Wickelwelle 24a in eine erste Richtung, durch welche eine in Fig. 4 nicht dargestellte Rollobahn auf die Wickelwelle 24a aufgewickelt wird, gesperrt ist. Mit dem Kegelrad 25 der Wickelwelle 24a ist vorzugsweise ein weiteres Kegelrad verbunden, welches in Fig. 4 nicht dargestellt ist. Dadurch ist in Fig. 4 eine auf dem Stutzen 30 gemäß Fig. 3 angebrachte Lagerhülse 26 sichtbar, auf welcher das Kegelrad und die Wickelwelle 24d gelagert sind.

Wie in Fig. 4 weiter erkennbar, ist auf dem in Fig. 4 größtenteils verdeckten Lagerstutzen 34 ein Lagerelement 70 angebracht, durch welches die Aufnahmevorrichtung 3 mit der Führungsschiene 7 verbunden ist.

Fig. 5 zeigt das Detail gemäß Fig. 4, wobei auf eine Darstellung der Führungsschiene 7, der Wickelwellen 24a und 24d, der Sperrklinke 41 und des Löseknopfs 40 verzichtet ist. Wie in Fig. 5 erkennbar, sind Lagerelemente 44 für den Löseknopf 40 und die Sperrklinke 41 gemäß Fig. 4 auf einer Blende 27 vorgesehen. Die Blende 27 hat jedoch gemäß der Erfindung keine oder zumindest keine wesentliche tragende Funktion, da die tragende Funktion des Staufachs 2 gemäß Fig. 1 durch den Tragrahmen erfüllt wird, welcher durch die Wickelwellen 24a bis 24d und die Aufnahmevorrichtungen 3 gebildet wird. Die Blende 27 kann daher beispielsweise aus einem Material mit einem relativ geringen spezifischen Gewicht hergestellte werden. Lediglich für eine Gewichtskraft beim Betätigen des Löseknopfs 40 und/oder der Sperrklinke 41 sollte die Blende 27 eine gewisse Steifigkeit aufweisen. Die Blende 27 kann zu diesem Zweck beispielsweise bereichsweise verstärkt. Gewichtskräfte von in das Staufach eingelegten Gegenständen müssen dagegen nicht durch die Blende 27 und/oder eine in Fig. 1 dargestellte Abdeckung 22 aufgenommen werden. Wie in Fig. 5 weiter erkennbar ist, weisen die dargestellten Kegelräder 25 Rastvorsprünge 250 auf, durch welche die Kegelräder 25 mit zugehörigen Wickelwellen 24a bis 24d drehfest koppelbar sind.

Durch die drei im Wesentlichen baugleichen Stutzen 30 bis 32 ist es möglich, die Sperrvorrichtung 4 in insgesamt acht verschiedenen Positionen an dem Staufach 2 vorzusehen. Dem Designer eines Staufachs für einen bestimmten Fahrzeugtyp wird somit eine große Designfreiheit gegeben. Daneben ist es denkbar, auch andere Sperrvorrichtungen auf der Aufnahmevorrichtung zu lagern, durch welche eine Drehbewegung der Wickelwellen 24a bis 24d in eine Aufwickelrichtung der Rollobahnen 20a bis 20d verhindert wird. So ist es beispielsweise denkbar, die Sperrvorrichtung als Schlingenbremse oder dergleichen zu gestalten. Weiter ist es möglich, durch eine ergänzungsgemäße Aufnahmevorrichtung auch eine Sperrvorrichtung zu lagern, welche eine Längung der Wandung 20 in eine Z-Richtung gemäß Fig. 1 beispielsweise bei einem Transport verhindert.

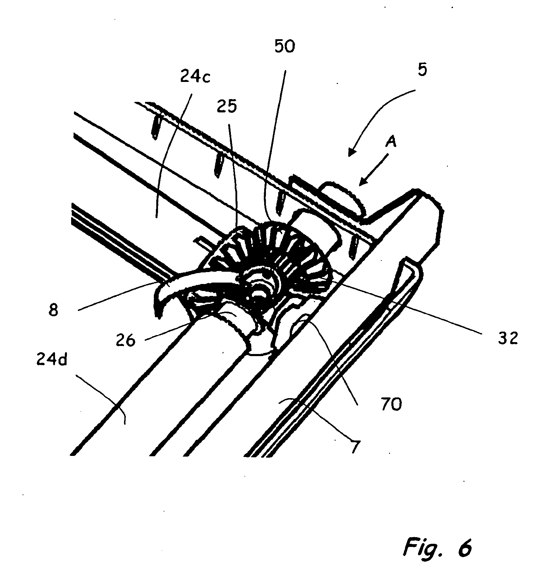

Fig. 6 zeigt schematisch ein Detail VI gemäß Fig. 2 mit einer Sperrvorrichtung 5, durch welche eine Längung der Wandung 20 in Z-Richtung gemäß Fig. 1 verhindert wird. Die Sperrvorrichtung 5 umfasst ein Sperr-Kegelrad 50, welches auf einem Stutzen 32 einer Aufnahmevorrichtung 3 gemäß Fig. 3 angebracht ist. Das Sperr-Kegelrad 50 ist dabei derart angeordnet, dass es ohne von außen einwirkende Sperrkräfte nicht mit einem Kegelrad 25 einer Wickelwelle 24c kämmt, welches auf einem in Fig. 6 verdeckten, rechtwinklig zu dem Stutzen 32 stehenden Stutzen 31 angeordnet ist. Das Sperr-Kegelrad 50 wird beispielsweise durch eine nicht dargestellte Feder oder ein anderes Zwangselement in einer Position außer Eingriff mit Kegelrad 25 gehalten. Das Sperr-Kegelrad 50 ist entlang des Stutzens 32 in eine Axialrichtung a verschiebbar, so dass es in Eingriff mit dem Kegelrad 25 kommt und so eine Drehung der drehfest mit dem Kegelrad 25 verbundenen Wickelwelle 24c verhindert. Zu diesem Zweck ist das Sperr-Kegelrad 50 beispielsweise drehfest mit einem in Fig. 6 nicht dargestellten Kegelrad verbunden, welches auf der in Fig. 6 dargestellten Hülse 26 angeordnet ist, wobei die Hülse 26 auf dem Stutzen 30 der Aufnahmevorrichtung 3 gelagert ist, welcher koaxial zu dem Stutzen 32 angeordnet ist. Wenn die beiden koaxial angeordneten, zueinander weisenden, drehfest miteinander verbunden Kegelräder gleichzeitig in das dazwischen liegende Kegelrad 25 greifen, so treiben sie das Kegelrad 25 gegensinnig an bzw. werden durch das Kegelrad 25 gegensinnig angetrieben. Somit kann eine Drehbewegung der Wickelwellen 24c und 24d sowie der damit synchronisierten, verbleibenden Wickelwellen 24a, 24b wirksam verhindert werden.

In einer anderen Ausgestaltung ist das Sperr-Kegelrad 50 drehfest an der Aufnahmevorrichtung 3 gelagert, so dass bei einem Ineinandergreifen des Sperr-Kegelrads und des an der Wickelwelle 24c angeordneten Kegelrads 25 eine Drehbewegung wirksam verhindert wird.

Durch die erfindungsgemäße Aufnahmevorrichtung 3 ist es somit möglich, sowohl die Wickelwellen 24a bis 24d als auch beliebige Funktionselemente, wie die Sperrvorrichtungen 4, 5 oder den Halter 8 aufzunehmen. Durch den universellen Einsatz der Aufnahmevorrichtung 3 lassen sich Werkzeugkosten reduzieren. Die Aufnahmevorrichtung 3 und die Wickelwellen 24a bis 24d übernehmen die Tragfunktion oder Stützfunktion des Staufachs, eventuell zusätzlich vorgesehene Abdeckungen 22 oder Blenden 27 haben lediglich eine Sichtschutzfunktion. Dadurch kann ein Gewicht des Staufachs gegenüber Konstruktionen mit Lagertragrahmen reduziert werden. Zudem können die einzelnen Bauteile sehr genau zueinander positioniert werden.

## Patentansprüche

1. Staufach für ein Kraftfahrzeug mit einer Wandung (20) und einem die Wandung (20) tragenden Tragrahmen, wobei eine Höhe der Wandung (20) mindestens abschnittsweise mittels mindestens einer ersten Wickelwelle (24a) veränderbar ist, **dadurch gekennzeichnet, dass** der Tragrahmen mindestens eine Aufnahmevorrichtung (3) mit wenigstens einem ersten Stutzen (30, 31, 32) aufweist und die erste Wickelwelle auf dem ersten Stutzen (30) gelagert ist, so dass die erste Wickelwelle (24a) einen Teil des Tragrahmens bildet.

2. Staufach nach Anspruch 1, **dadurch gekennzeichnet, dass** der Tragrahmen eine im Wesentlichen rechteckförmige Fläche aufspannt, wobei die Aufnahmevorrichtung (3) einen Eckbereich des Tragrahmens bildet.

3. Staufach nach Anspruch 2, **dadurch gekennzeichnet, dass** die Aufnahmevorrichtung (3) wenigstens zwei, im Wesentlichen rechtwinklig zueinander angeordnete, vorzugsweise wenigstens drei, T-fömig angeordnete im Wesentlichen baugleiche Stutzen (30, 31, 32) aufweist.

4. Staufach nach Anspruch 3, **dadurch gekennzeichnet, dass** an zwei zueinander rechtwinklig angeordneten Stutzen (30, 31) jeweils eine Wickelwelle gelagert ist.

5. Staufach nach Anspruch 3 oder 4, **dadurch gekennzeichnet, dass** die Stutzen (30, 31, 32) eine nicht-rotationssymmetrische Außenkontur zur drehfesten Aufnahme einer Lagerhülse (26) aufweisen.

6. Staufach nach Anspruch 3, 4 oder 5, **dadurch gekennzeichnet, dass** eine Sperrvorrichtung (4, 5) zumindest teilweise auf einem Stutzen (32) der Aufnahmevorrichtung angeordnet ist, wobei durch die Sperrvorrichtung (4, 5) mindestens eine Drehbewegung der ersten Wickelwelle (24a) sperrbar ist.

7. Staufach nach Anspruch 6, **dadurch gekennzeichnet, dass** die Sperrvorrichtung (4) eine Sperrklinke (41) umfasst, wobei eine Drehbewegung der ersten Wickelwelle (24a) zum Verringern der Höhe der Wandung (20) durch die Sperrklinke (41) sperrbar ist.

8. Staufach nach Anspruch 6, **dadurch gekennzeichnet, dass** die Sperrvorrichtung (5) Mittel aufweist, durch welche eine Drehbewegung der Wickelwelle (24a) für eine Längung der Wandung sperrbar ist.

9. Staufach nach einem der Ansprüche 1 bis 8, **dadurch gekennzeichnet, dass** die Aufnahmevorrichtung wenigstens einen Lagerstutzen (34) zur Anbindung einer Führungsvorrichtung, insbesondere einer Laufschiene aufweist.

10. Staufach nach einem der Ansprüche 1 bis 9, **dadurch gekennzeichnet, dass** an wenigstens einem Ende der Wickelwelle (24a, 24b, 24c) ein Kegelrad (25) drehfest angeordnet ist, wobei das Kegelrad (25) mit einem Sperr-Kegelrad (43, 50) der Sperrvorrichtung (4, 5) zusammenwirkt.

11. Staufach nach einem der Ansprüche 1 bis 10, **dadurch gekennzeichnet, dass** die Wandung (20) wenigstens zwei Rollobahnen umfasst, welche auf zwei im Wesentlichen rechtwinklig zueinander angeordneten Wickelwellen (24a, 24b, 24c, 24d) auf- und abwickelbar angebracht sind.

12. Staufach nach Anspruch 11, **dadurch gekennzeichnet, dass** die Rollobahnen an ihren Rändern zueinander komplementäre Reißverschlusselemente aufweisen, welche durch einen im Wesentlichen ortsfest gelagerten Reißverschlussschieber (8) verbindbar sind.

13. Staufach nach Anspruch 12, **dadurch gekennzeichnet, dass** der Reißverschlussschieber (8) in der Aufnahmevorrichtung (3) gelagert ist.

14. Staufach nach Anspruch 13, **dadurch gekennzeichnet, dass** ein Lager (35) für den Reißverschlussschieber (8) in einem Schnittbereich der Stutzen (30, 31, 32, 34) ausgebildet ist.

15. Aufnahmevorrichtung mit einem Staufach nach einem der Ansprüche 1 bis 14, wobei eine Höhe einer Wandung des Staufachs mindestens abschnittsweise mittels der Wickelwelle veränderbar ist, **dadurch gekennzeichnet, dass** die Aufnahmevorrichtung einen ersten Stutzen, auf welchem die Wickelwelle drehbar lagerbar ist, und mindestens einen zweiten Stutzen aufweist, wobei auf dem zweiten Stutzen eine zweite Wickelwelle, eine Sperrvorrichtung und/oder eine Führungsvorrichtung lagerbar ist.

## Claims

1. Storage compartment for a motor vehicle, with a wall (20) and a supporting frame supporting the wall (20), wherein the wall (20) can be varied in height, at least in some sections, by means of at least one first winding shaft (24a), **characterized in that** the supporting frame has at least one receiving device (3) with at least one first connecting piece (30, 31, 32), and the first winding shaft is mounted on the first connecting piece (30) such that the first winding shaft (24a) forms part of the supporting frame.

2. Storage compartment according to claim 1, **characterized in that** the supporting frame spans a substantially rectangular surface, with the receiving device (3) forming a corner region of the supporting frame.

3. Storage compartment according to claim 2, **characterized in that** the receiving device (3) has at least two substantially structurally identical connecting pieces (30, 31, 32) arranged substantially at right angles to one another, preferably at least three of the same arranged in a T-shaped manner.

4. Storage compartment according to claim 3, **characterized in that** a respective winding shaft is mounted at two connecting pieces (30, 31) arranged at right angles to each other.

5. Storage compartment according to claim 3 or 4, **characterized in that** the connecting pieces (30, 31, 32) have an outer contour, which is not rotationally symmetrical, for the rotationally fixed receiving of a bearing sleeve (26).

6. Storage compartment according to claim 3, 4 or 5, **characterized in that** a blocking device (4, 5) is at least partially arranged on a connecting piece (32) of the receiving device, said blocking device (4, 5) being able to block at least one rotational movement of the first winding shaft (24a).

7. Storage compartment according to claim 6, **characterized in that** the blocking device (4) comprises a catch (41), with a rotational movement of the first winding shaft (24a) in order to reduce the height of the wall (20) being able to be blocked by the catch (41).

8. Storage compartment according to claim 6, **characterized in that** the blocking device (5) has means which are able to block a rotational movement of the winding shaft (24a) for lengthening the wall.

9. Storage compartment according to one of claims 1 to 8, **characterized in that** the receiving device has at least one bearing connecting piece (34) for the connection of a guide device, in particular a running rail.

10. Storage compartment according to one of claims 1 to 9, **characterized in that** a bevel gear (25) is arranged in a rotationally fixed manner at at least one end of the winding shaft (24a, 24b, 24c), the bevel gear (25) interacting with a blocking bevel gear (43, 50) of the blocking device (4, 5).

11. Storage compartment according to one of claims 1 to 10, **characterized in that** the wall (20) comprises at least two roller-blind webs which are fitted in a manner such that they can be wound up and unwound on two winding shafts (24a, 24b, 24c, 24d) arranged substantially at right angles to each other.

12. Storage compartment according to claim 11, **characterized in that** the edges of the roller-blind webs have mutually complementary zip-fastener elements which can be connected by a zip-fastener slider (8) mounted in a substantially positionally fixed manner.

13. Storage compartment according to claim 12, **characterized in that** the zip-fastener slider (8) is mounted in the receiving device (3).

14. Storage compartment according to claim 13, **characterized in that** a bearing (35) for the zip-fastener slider (8) is formed in an intersecting region of the connecting pieces (30, 31, 32, 34).

15. Receiving device for at least one winding shaft of a storage compartment according to one of claims 1 to 14, wherein a wall of the storage compartment can be varied in height, at least in some sections, by means of the winding shaft, **characterized in that** the receiving device has a first connecting piece on which the winding shaft is rotatably mounted, and at least one second connecting piece, with a second winding shaft, a blocking device and/or a guide device being mountable on the second connecting piece.

## Revendications

1. Compartiment de rangement pour un véhicule, comprenant une paroi (20) et un cadre porteur portant la paroi (20), sachant qu'une hauteur de la paroi (20) peut être modifiée au moins partiellement au moyen d'au moins un premier arbre d'enroulement (24a), **caractérisé en ce que** le cadre porteur présente au moins un dispositif de réception (3) avec au moins un premier manchon (30, 31, 32) et que le premier arbre d'enroulement est logé sur le premier manchon (30), de sorte que le premier arbre d'enroulement (24a) constitue une partie du cadre porteur.

2. Compartiment de rangement selon la revendication 1, **caractérisé en ce que** le cadre porteur entoure une surface rectangulaire pour l'essentiel, le dispositif de réception (3) constituant une zone d'angle du cadre porteur.

3. Compartiment de rangement selon la revendication 2, **caractérisé en ce que** le dispositif de réception (3) présente au moins deux manchons disposés quasiment à angle droit l'un par rapport à l'autre, de préférence au moins trois manchons (30, 31, 32) disposés en forme de T et de conception identique pour l'essentiel.

4. Compartiment de rangement selon la revendication 3, **caractérisé en ce que** sur deux manchons (30, 31) disposés à angle droit l'un par rapport à l'autre est à chaque fois logé un arbre d'enroulement.

5. Compartiment de rangement selon la revendication 3 ou 4, **caractérisé en ce que** les manchons (30, 31, 32) présentent un contour extérieur qui n'est pas à symétrie de révolution pour un logement solidaire en rotation d'une douille de palier (26).

6. Compartiment de rangement selon la revendication 3, 4 ou 5, **caractérisé en ce qu'**un organe de blocage (4, 5) est disposé au moins partiellement sur un manchon (32) du dispositif de réception, sachant que l'organe de blocage (4, 5) permet de bloquer au moins un mouvement de rotation du premier arbre d'enroulement (24a).

7. Compartiment de rangement selon la revendication 6, **caractérisé en ce que** l'organe de blocage (4) comprend un cliquet d'arrêt (41), sachant qu'un mouvement de rotation du premier arbre d'enroulement (24a) pour réduire la hauteur de la paroi (20) peut être bloqué par le cliquet d'arrêt (41).

8. Compartiment de rangement selon la revendication 6, **caractérisé en ce que** l'organe de blocage (5) présente des moyens par lesquels un mouvement de rotation de l'arbre d'enroulement (24a) pour allonger la paroi peut être bloqué.

9. Compartiment de rangement selon l'une des revendications 1 à 8, **caractérisé en ce que** le dispositif de réception présente au moins un manchon de palier (34) pour raccorder un organe de guidage, en particulier un rail de roulement.

10. Compartiment de rangement selon l'une des revendications 1 à 9, **caractérisé en ce que** sur au moins une extrémité de l'arbre d'enroulement (24a, 24b, 24c) est disposé un pignon conique (25) solidaire en rotation, sachant que le pignon conique (25) interagit avec un pignon conique de blocage (43, 50) de l'organe de blocage (4, 5).

11. Compartiment de rangement selon l'une des revendications 1 à 10, **caractérisé en ce que** la paroi (20) comprend au moins deux bandes de store qui sont fixées de manière à pouvoir être enroulées et déroulées sur deux arbres d'enroulement (24a, 24b, 24c, 24d) disposés quasiment à angle droit l'un par rapport à l'autre.

12. Compartiment de rangement selon la revendication 11, **caractérisé en ce que** les bandes de store présentent sur leurs bords des éléments de fermeture à glissière complémentaires qui peuvent être reliés par un curseur de fermeture à glissière (8) logé de manière stationnaire pour l'essentiel.

13. Compartiment de rangement selon la revendication 12, **caractérisé en ce que** le curseur de fermeture à glissière (8) est logé dans le dispositif de réception (3).

14. Compartiment de rangement selon la revendication 13, **caractérisé en ce qu'**un palier (35) pour le curseur de fermeture à glissière (8) est formé dans une zone d'intersection des manchons (30, 31, 32, 34).

15. Dispositif de réception avec un compartiment de rangement selon l'une des revendications 1 à 14, sachant qu'une hauteur de la paroi du compartiment de rangement peut être modifiée au moins partiellement au moyen de l'arbre d'enroulement, **caractérisé en ce que** le dispositif de réception présente un premier manchon sur lequel l'arbre d'enroulement peut être logé de manière pivotante, et au moins un deuxième manchon, sachant que sur le deuxième manchon peuvent être logés un deuxième arbre d'enroulement, un organe de blocage et/ou un organe de guidage.
